# FASCICULE DE BREVET EUROPEEN

(11) **EP 2 488 392 B1**
(45) Date de publication et mention de la délivrance du brevet: **04.09.2013**
(21) Numéro de dépôt: 10784328.6
(22) Date de dépôt: 15.10.2010
(51) Int. Cl.: B60R 5/04

(54) **TABLETTE DE RECOUVREMENT D'UN COMPARTIMENT À BAGAGES DE VÉHICULE AUTOMOBILE**
ABDECKUNG FÜR DIE GEPÄCKABLAGE EINES KRAFTFAHRZEUGS
COVER FOR THE LUGGAGE COMPARTMENT OF A MOTOR VEHICLE

(30) Priorité: 16.10.2009 FR 0904990
(43) Date de publication de la demande: 22.08.2012
(73) Titulaire: Centre d'Etude et de Recherche pour l'Automobile (CERA), 51100 Reims (FR)
(72) Inventeur: BRILLON, Eric, F-51140 Treslon (FR)
(74) Mandataire: Sayettat, Julien Christian
(86) Numéro de dépôt international: PCT/FR2010/000690
(87) Numéro de publication internationale: WO 2011/045492

(56) Documents cités:
- DE-A1- 10 007 137
- FR-A1- 2 912 351
- GB-A- 2 352 434
- JP-A- 11 129 816
- JP-A- 2001 158 298
- JP-A- 2003 291 731
- JP-A- 2006 151 218

## Description

L'invention concerne une tablette de recouvrement d'un compartiment à bagages de véhicule automobile.

Il est connu de réaliser de telles tablettes à partir de divers matériaux structurels tels que de la matière plastique ou du feutre aggloméré. De telles réalisations présentent l'inconvénient de requérir des moyens de fabrication complexes, notamment des moules et/ou presses, ce qui a un impact important sur le coût de fabrication. En outre, les tablettes ainsi réalisées présentent un poids important.

On connaît aussi des tablettes réalisées avec un cadre à l'intérieur duquel est tendue une nappe souple, le cadre étant par exemple inséré dans un ourlet périphérique de la nappe. Une telle réalisation permet de fabriquer des tablettes légères et de moindre coût. Cependant, il est nécessaire de prévoir un cadre de résistance importante pour assurer une bonne tenue en flexion de la tablette. En outre, lorsque l'on réalise un ourlet, sa confection demande une main d'oeuvre conséquente, avec les coûts qui en résultent.

Le DE 100 07 137 A1, qui est considéré comme l'état de la technique plus proche, divulgue une tablette de recouvrement d'un compartiment à bagages de véhicule automobile, la tablette comprenant au moins un cadre de renfort, le cadre étant inséré entre une nappe supérieure et une nappe inférieure de matériau souple.

L'invention a pour but de proposer un agencement palliant les inconvénients sus évoqués.

A cet effet, l'invention propose une tablette de recouvrement d'un compartiment à bagages de véhicule automobile, ladite tablette comprenant au moins un cadre de renfort, ledit cadre étant inséré entre une nappe supérieure et une nappe inférieure de matériau souple, lesdites nappes étant contrecollées l'une à l'autre sur sensiblement toute leur surface.

Le contre collage des nappes sur sensiblement toute leur surface permet d'obtenir un stratifié présentant une certaine rigidité que ne présentent pas les nappes considérées individuellement.

De ce fait, on peut employer un cadre de moindre résistance à la flexion, ce qui permet de diminuer le poids et le coût de la tablette.

D'autres objets et avantages de l'invention apparaîtront dans le cadre de la description qui suit, basée sur les figures suivantes :
- la figure 1 qui est une représentation schématique en perspective éclatée d'une tablette selon une réalisation,
- la figure 2 qui une représentation schématique de face d'une tablette selon une autre réalisation.

On décrit à présent une tablette 1 de recouvrement d'un compartiment à bagages de véhicule automobile, ladite tablette comprenant au moins un cadre 2 de renfort, ledit cadre étant inséré entre une nappe supérieure 3 et une nappe inférieure 4 de matériau souple, lesdites nappes étant contrecollées l'une à l'autre sur sensiblement toute leur surface.

Selon une réalisation, le cadre 2 est à base de fil ou de tube métallique replié.

Selon une autre réalisation, le cadre 2 est à base de matériau synthétique.

Le matériau souple constitutif des nappes 3,4 peut notamment être choisi dans les familles suivantes : non tissé, textile, textile enduit de matière plastique, feuille de matière plastique.

Selon une réalisation, la nappe supérieure 3 est formée d'un matériau différent de celui de la nappe inférieure 4. Par exemple, l'un des matériaux est poreux, ce qui permet une absorption acoustique, alors que l'autre matériau est étanche, par exemple en vue de bénéficier d'une face d'aspect aisément nettoyable.

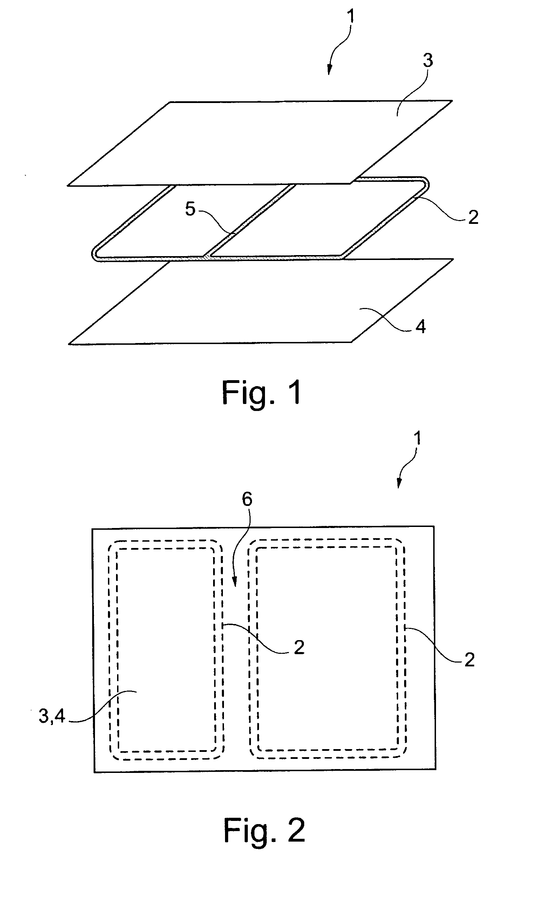

Selon la réalisation de la figure 1, la tablette 1 comprend une entretoise 5 de renfort du cadre 2, qui peut notamment être associé audit cadre par soudure.

De façon non représentée, le cadre 2 est pourvu de moyens d'accrochage de la tablette 1 au véhicule, par exemple sous la forme d'axes issus dudit cadre et saillant des coins avant dudit cadre en vue d'un montage en rotation de ladite tablette.

Selon une réalisation non représentée, les nappes 3,4 sont contrecollées l'une à l'autre par l'intermédiaire d'une couche poreuse d'absorption acoustique s'étendant sur tout ou partie de leur surface, la nappe supérieure 3 et/ou inférieure 4 étant poreuse afin de permettre le passage des ondes sonores au sein de ladite couche d'absorption.

Selon la réalisation de la figure 1 le cadre est unique et périphérique.

Selon la réalisation de la figure 2, la tablette 1 comprend une pluralité - ici deux - cadres 2 juxtaposés à faible distance l'un de l'autre afin de ménager une zone 6 souple intercalaire, ladite zone étant agencée pour permettre un pliage de ladite tablette autour de ladite zone formant charnière souple.

## Revendications

1. Tablette (1) de recouvrement d'un compartiment à bagages de véhicule automobile, ladite tablette comprenant au moins un cadre (2) de renfort, ledit cadre étant inséré entre une nappe supérieure (3) et une nappe inférieure (4) de matériau souple, lesdites nappes étant contrecollées l'une à l'autre sur sensiblement toute leur surface.

2. Tablette selon la revendication 1, **caractérisée en ce que** le cadre (2) est à base de fil ou de tube métallique replié.

3. Tablette selon la revendication 1, **caractérisée en ce que** le cadre (2) est à base de matériau synthétique.

4. Tablette selon l'une quelconque des revendications 1 à 3, **caractérisée en ce que** le matériau souple constitutif des nappes (3,4) est choisi dans les familles suivantes : non tissé, textile, textile enduit de matière plastique, feuille de matière plastique.

5. Tablette selon l'une quelconque des revendications 1 à 4, **caractérisée en ce que** la nappe supérieure (3) est formée d'un matériau différent de celui de la nappe inférieure (4).

6. Tablette selon l'une quelconque des revendications 1 à 5, **caractérisée en ce qu'**elle comprend une entretoise (5) de renfort du cadre (2).

7. Tablette selon l'une quelconque des revendications 1 à 6, **caractérisé en ce que** le cadre (2) est pourvu de moyens d'accrochage de la tablette (1) au véhicule.

8. Tablette selon l'une quelconque des revendications 1 à 7, **caractérisée en ce que** les nappes (3,4) sont contrecollées l'une à l'autre par l'intermédiaire d'une couche poreuse d'absorption acoustique s'étendant sur tout ou partie de leur surface, la nappe supérieure (3) et/ou inférieure (4) étant poreuse.

9. Tablette selon l'une quelconque des revendications 1 à 8, **caractérisée en ce que** le cadre (2) est unique et périphérique.

10. Tablette selon l'une quelconque des revendications 1 à 8, **caractérisée en ce qu'**elle comprend une pluralité de cadres (2) juxtaposés à faible distance l'un de l'autre afin de ménager une zone (6) souple intercalaire, ladite zone étant agencée pour permettre un pliage de ladite tablette autour de ladite zone formant charnière souple.

## Patentansprüche

1. Heckablage (1) zum Abdecken eines Gepäckraumes eines Kraftfahrzeugs, wobei die besagte Gepäckraumabdeckung zumindest einen Versteifungsrahmen (2) umfasst, und der besagte Rahmen zwischen eine obere Gewebelage (3) und eine untere Gewebelage (4) aus einem flexiblen Werkstoff eingeführt wird, und die besagten Gewebelagen auf etwa ihrer gesamten Fläche miteinander verklebt sind.

2. Heckablage nach Anspruch 1, **dadurch gekennzeichnet, dass** der Rahmen (2) aus einem gefalteten Kabel oder Metallrohr besteht.

3. Heckablage nach Anspruch 1, **dadurch gekennzeichnet, dass** der Rahmen (2) aus einem synthetischen Werkstoff besteht.

4. Heckablage nach irgendeinem der Ansprüche 1 bis 3, **dadurch gekennzeichnet, dass** der flexible Werkstoff, aus dem sich die Gewebelagen (3, 4) zusammensetzen, aus den folgenden Gruppen ausgewählt wird: Vlies, Textilien, mit Kunststoff überzogene Textilien, Kunststofffolie.

5. Heckablage nach irgendeinem der Ansprüche 1 bis 4, **dadurch gekennzeichnet, dass** die obere Gewebelage (3) aus einem anderen Werkstoff gebildet wird, als die untere Gewebelage (4).

6. Heckablage nach irgendeinem der Ansprüche 1 bis 5, **dadurch gekennzeichnet, dass** sie ein Zwischenstück (5) zum Verstreben des Rahmens (2) umfasst.

7. Heckablage nach irgendeinem der Ansprüche 1 bis 6, **dadurch gekennzeichnet, dass** der Rahmen (2) mit Vorrichtungen zum Einhängen der Gepäckraumabdeckung (1) im Fahrzeug versehen ist.

8. Heckablage nach irgendeinem der Ansprüche 1 bis 7, **dadurch gekennzeichnet, dass** die Gewebelagen (3, 4) durch eine poröse und geräuschabsorbierende Schicht miteinander verklebt sind, die sich über die gesamte Fläche oder einen Teil davon erstreckt, wobei die obere Gewebelage (3) und/oder die untere Gewebelage (4) porös sind/ ist.

9. Heckablage nach irgendeinem der Ansprüche 1 bis 8, **dadurch gekennzeichnet, dass** es nur einen Rahmen (2) gibt und er umlaufend angeordnet ist.

10. Heckablage nach irgendeinem der Ansprüche 1 bis 8, **dadurch gekennzeichnet, dass** sie mehrere Rahmen (2) umfasst, die jeweils in einem geringen Abstand nebeneinander angeordnet sind, um einen flexiblen Einlagenbereich (6) zu bilden, wobei der besagte Bereich angeordnet ist, um die besagte Gepäckraumabdeckung um den besagten Bereich, der ein flexibles Scharnier bildet, falten zu können.

## Claims

1. Panel (1) for covering a motor vehicle luggage compartment, said panel comprising at least one reinforcing frame (2), said frame being inserted between a top layer (3) and a bottom layer (4) of flexible material, said layers being bonded to each other over substantially the entire surface thereof.

2. Panel according to claim 1, **characterised in that** the frame (2) is based on wire or a bent metal tube.

3. Panel according to claim 1, **characterised in that** the framer (2) is based on synthetic material.

4. Panel according to any one of claims 1 to 3, **characterised in that** the flexible material making up the layers (3, 4) is chosen from the following families: nonwoven, textile, plastic-coated textile, sheet of plastics material.

5. Panel according to any one of claims 1 to 4, **characterised in that** the top layer (3) is formed by a material different from that of the bottom layer (4).

6. Panel according to any one of claims 1 to 5, **characterised in that** it comprises a strut (5) reinforcing the frame (2).

7. Panel according to any one of claims 1 to 6, **characterised in that** the frame (2) is provided with means of attaching the panel (1) in the vehicle.

8. Panel according to any of claims 1 to 7, **characterised in that** the layers (3, 4) are bonded to each other by means of a porous acoustic absorption layer extending over all or part of the surface thereof, the top layer (3) and/or bottom layer (4) being porous.

9. Panel according to any one of claims 1 to 8, **characterised in that** the frame (2) is the only one and is peripheral.

10. Panel according to any one of claims 1 to 8, **characterised in that** it comprises a plurality of frames (2) juxtaposed at a short distance from each other in order to form an intermediate flexible zone (6), said zone being arranged to enable said panel to be folded around said zone forming a flexible hinge.
